# EUROPÄISCHE PATENTSCHRIFT

(11) **EP 2 084 479 B1**
(45) Veröffentlichungstag und Bekanntmachung des Hinweises auf die Patenterteilung: **10.03.2010**
(21) Anmeldenummer: 07820162.1
(22) Anmeldetag: 12.09.2007
(51) Int. Cl.: F28D 7/00, F28D 21/00, F28G 13/00

(54) **VERFAHREN UND VORRICHTUNG ZUM ÜBERTRAGEN VON WÄRME ZWISCHEN IN EINEM BEHÄLTER BEFINDLICHEM ABWASSER UND EINER FLÜSSIGKEIT**
METHOD AND DEVICE FOR TRANSMITTING HEAT BETWEEN WASTE WATER LOCATED IN A TANK AND A FLUID
PROCÉDÉ ET DISPOSITIF DE TRANSFERT DE CHALEUR ENTRE DES EAUX USÉES PRÉSENTES DANS UN RÉSERVOIR ET UN LIQUIDE

(30) Priorität: 28.10.2006 DE 102006050922
(43) Veröffentlichungstag der Anmeldung: 05.08.2009
(73) Patentinhaber: Huber SE, 92334 Berching (DE)
(72) Erfinder: FROMMANN, Christian, 92318 Neumarkt (DE)
(74) Vertreter: Bergmeier, Werner
(86) Internationale Anmeldenummer: PCT/EP2007/059606
(87) Internationale Veröffentlichungsnummer: WO 2008/052839

(56) Entgegenhaltungen:
- EP-A- 1 310 602
- EP-A- 1 854 524
- WO-A-2006/097650
- DE-A1- 3 605 585
- FR-A- 2 788 590
- US-A- 4 671 351

## Beschreibung

Die vorliegende Erfindung betrifft ein Verfahren zum Übertragen von Wärme zwischen in einem Behälter befindlichem Abwasser und einer Flüssigkeit mittels eines von der Flüssigkeit durchströmten Wärmetauschers mit einer vom Abwasser berührten Außenfläche, wobei in dem Abwasser eine konvektive Strömung erzeugt wird, die das Abwasser entlang der Außenfläche bewegt sowie eine Vorrichtung zur Durchführung des Verfahrens.

Das Abwasser kann häusliches, kommunales, gewerbliches oder industrielles Abwasser sein. Bei der Flüssigkeit kann es sich beispielsweise um Wasser, eine wässrige Lösung, Alkohol oder Öl handeln. Entweder wird Wärme vom Abwasser auf die Flüssigkeit übertragen, um das Abwasser zu kühlen oder die Flüssigkeit zu erwärmen. Insbesondere kann die aufgewärmte Flüssigkeit im Kreislauf durch eine Wärmepumpe geführt werden, um die Wärme des Abwassers für Heizzwecke nutzbar zu machen. Umgekehrt kann Wärme aber auch von der Flüssigkeit auf das Abwasser übertragen werden, um dieses aufzuwärmen und dadurch besser behandelbar zu machen.

Bei dem Behälter kann es sich um einen geschlossenen Tank oder um ein offenes Becken handeln. Der Behälter kann vom Abwasser kontinuierlich durchströmt sein, oder Abwasser wird dem Behälter chargenweise zu- und abgeführt.

Der Wärmetauscher ist ein Hohlkörper, der innen von der Flüssigkeit durchströmt wird und dessen Außenfläche mit dem Abwasser in Berührung steht. Durch zumindest eine Wand des Wärmetauschers, die vorzugsweise aus gut wärmeleitendem Blech besteht, wird Wärme übertragen, wenn die Flüssigkeit und das Abwasser eine unterschiedliche Temperatur aufweisen. Die Wärmeübertragungsleistung des Wärmetauschers ist proportional zu der mit Abwasser berührten Außenfläche, zur Temperaturdifferenz der beiden Fluide und zu einem Wärmeübertragungskoeffizienten (dem k-Wert). Der k-Wert ist der Kehrwert eines Wärmeübertragungswiderstandes. Dieser Widerstand ist die Summe der Widerstände gegen den Wärmeübergang von der Flüssigkeit auf die Wand, gegen die Wärmeleitung durch die Wand und gegen den Wärmeübergang von der Wand in das umgebende Abwasser. Der Widerstand gegen die Wärmeleitung durch die Wand ist proportional zur Stärke der Wand und umgekehrt proportional zur Wärmeleitfähigkeit des Wandmaterials, also bedingt durch die Bauart des Wärmetauschers. Die Widerstände gegen die Übertragung von Wärme von den Fluiden auf die Wand und umgekehrt sind hingegen nicht nur abhängig von den Eigenschaften der Fluide (insbesondere deren Wärmeleitfähigkeiten, Viskositäten und Wärmekapazitäten), sondern insbesondere auch abhängig von deren Strömungsverhältnissen. Die Kehrwerte der inneren und äußeren Wärmeübertragungswiderstände sind Wärmeübergangskoeffizienten (Alpha-Werte).

Alpha-Werte sind gering, das heißt, die Wärmeübertragung ist schlecht, wenn sich Fluide in Ruhe befinden. Dann ist der Wärmetransport angewiesen auf die mäßige Wärmeleitung infolge von Diffusion und auf natürliche Konvektion, die eine Strömung ist, die durch die veränderte Dichte der Fluide bei ihrer Erwärmung oder Abkühlung an der Wand entsteht. Wesentlich bessere, also höhere Alpha-Werte sind durch erzwungene Konvektion erreichbar, das sind künstlich erzeugte Strömungen an der Wand. Strömungen werden durch ihre Reynolds-Zahl (Re) charakterisiert, die proportional ist zur Strömungsgeschwindigkeit und einer charakteristischen geometrischen Länge (z. B. dem Durchmesser eines Rohres) und umgekehrt proportional zur kinematischen Viskosität des Fluids.

Bei geringer Re-Zahl ist eine Strömung laminar, beim Überschreiten einer kritischen Re-Zahl schlägt sie um in eine turbulente Strömung und der Alpha-Wert steigt sprunghaft an. Beim Einsatz von Wärmetauschern ist es deshalb anzustreben, dass beide Fluide turbulent strömen. Bei der Flüssigkeit, die durch den Wärmetauscher gepumpt wird, ist es einfach, eine turbulente Strömung zu erzeugen, indem man den Durchfluss und damit die Strömungsgeschwindigkeit ausreichend hoch wählt. Für den k-Wert nützt es wenig, den inneren Alpha-Wert immer weiter zu erhöhen, wenn der äußere Alpha-Wert gering bleibt. Dann kann man die erforderliche Wärmeübertragungsleistung nur durch eine ausreichend große Außenfläche des Wärmetauschers erreichen, was den Nachteil hat, dass der Wärmetauscher groß und teuer wird. Um das zu vermeiden, muss man im Abwasser eine konvektive Strömung, vorzugsweise eine turbulente Strömung entlang der Außenfläche des Wärmetauschers erzeugen.

Diese Strömung soll vorzugsweise über die Außenfläche hinwegstreichen, d.h. sie soll eine ungefähr parallele Richtung zur Außenfläche haben. Durch eine definierte und hohe Strömungsgeschwindigkeit über der Außenfläche des Wärmetauschers wird der Alpha-Wert erhöht und störende Feststoffe und Beläge werden von der Außenfläche abgespült, weshalb die Außenfläche klein dimensioniert werden kann und die Kosten des Wärmetauschers gering bleiben.

Es ist Stand der Technik, Wärmetauscher in Abwasserkanälen oder Gerinnen einzubauen, um Wärme zwischen dem Abwasser und einer durch den Wärmetauscher strömenden Flüssigkeit zu übertragen. In dem Kanal oder Gerinne strömt das Abwasser an der Außenfläche des Wärmetauschers vorbei. Allerdings ist die Strömungsgeschwindigkeit abhängig vom Abwasserdurchfluss durch den Kanal oder das Gerinne sowie vom Füllstand darin. Weder der Durchfluss noch der Füllstand sind konstant, so dass keine definierte Strömung vorliegt. Normalerweise ist die Strömung laminar. Nur dann, wenn der Durchfluss, beispielsweise nach einem Regenereignis, stark erhöht ist, herrschen turbulente Strömungsverhältnisse. Wegen des normalerweise geringen Alpha-Wertes an der Außenfläche der Wärmetauscher müssen diese eine große Oberfläche haben. Sie sind verschmutzungsanfällig, insbesondere dann, wenn sie in Rohabwasserkanälen eingebaut werden.

Aus der Offenlegungsschrift DE 101 56 253 A1 ist bekannt, einen Wärmetauscher in einen Brauchwassertank zu integrieren, um die im Brauchwasser vorhandene thermische Energie an anderer Stelle weiter nutzen zu können. Das Brauchwasser muss hierfür in dem Tank zwischengespeichert werden, wobei es vorzugsweise durch Einblasen von Luft umgewälzt wird. Durch diese Umwälzung strömt das Brauchwasser an der Außenfläche des Wärmetauschers vorbei, wodurch der Wärmeaustausch verbessert und gleichzeitig Verschmutzungen von der Außenfläche des Wärmetauschers abgespült werden sollen.

Auch aus der Offenlegungsschrift DE 36 05 585 A1 ist ein in einem Abwasserbehälter eingebauter Wärmetauscher bekannt, an dessen Außenfläche eine konvektive Strömung erzeugt wird. In diesem Fall wird die Strömung durch Bewegen von flexiblen Wandungen des Abwasserbehälters erzeugt.

Aus der Europäischen Patentschrift EP 0 174 554 B1 ist ebenfalls ein in einen Behälter für verschmutztes Wasser eingebauter Wärmetauscher bekannt, wobei ein Spülgas unterhalb des Wärmetauschers in das Wasser eingeblasen wird, um die Außenfläche des Wärmetauschers zu reinigen und den Wärmeübergang zu verbessern.

Gemäß diesen Druckschriften werden konvektive Strömungen an den Außenflächen von Wärmetauschern zu dem Zweck erzeugt, den Wärmeübergang zu verbessern und die Außenflächen von Verschmutzungen zu reinigen. Die Wärmetauscher sind dabei stets in einem extra für diesen Zweck angeordneten Behälter untergebracht, in dem das Wasser zwischengespeichert wird oder durch einen relativ aufwändigen Strömungskanal hindurchgeleitet werden muss, welcher wiederum aus einer Vielzahl von Wärmetauscherplatten gebildet wird. Diese Einrichtungen erhöhen die Investitions- und Betriebskosten der Wärmetaucher jedoch beträchtlich.

Aufgabe der vorliegenden Erfindung ist es, ein Verfahren und eine Vorrichtung zur Durchführung des Verfahrens zur Verfügung zu stellen, welche die genannten Nachteile nicht aufweisen und eine einfache und kostengünstige Nutzung der in Abwässern vorhandenen thermischen Energie ermöglichen. Insbesondere ist es Aufgabe der Erfindung, bereits vorhandene Einrichtungen zusätzlich für den Wärmeaustausch zu nutzen, sodass die Energiebilanz weiter verbessert werden kann.

Diese Aufgabe wird durch das Verfahren sowie die Vorrichtung entsprechend den Merkmalen der unabhängigen Ansprüche gelöst.

Erfindungsgemäß strömt Abwasser durch einen Behälter, in dem sich ein Wärmetauscher befindet, wobei eine konvektive Strömung erzeugt wird, die zum einen als Hilfsmittel zur Reinigung des Abwassers dient, gleichzeitig aber auch zur Reinigung der Außenfläche des Wärmetauschers sowie der Verbesserung des Wärmeübergangs am Wärmetauscher genutzt wird.

Durchflossene Behälter sind Bestandteil beinahe jeder Abwasserreinigungsanlage und können in einfacher Weise zusätzlich für die Wärmeübertragung zwischen Abwasser und Brauchwasser nutzbar gemacht werden. Häufig sind in derartigen Behältern bereits Vorrichtungen zur Erzeugung von konvektiven Strömungen vorhanden, welche als Hilfsmittel zur Reinigung von Abwässern genutzt werden. Derartige Strömungen können beispielsweise durch Rührwerke oder durch Einblasen eines Gases wie Luft in das Abwasser erzeugt werden. Der Nutzen dieser konvektiven Strömungen für die Abwasserreinigung kann beispielsweise darin bestehen, dass Bodenablagerungen vermieden werden, dass das Abwasser durchmischt wird, dass Chemikalien in das Abwasser eingemischt werden, dass eine Fällung oder Flockung beschleunigt wird oder dass das Abwasser belüftet wird. Somit sind an unterschiedlichsten Stellen einer Abwasserreinigungsanlage bereits Strömungsverhältnisse vorhanden, die zusätzlich zu ihrer eigentlichen Aufgabe zur Verbesserung des Wärmeübergangs an einem Wärmetauscher oder zur Reinigung der Wärmetauscheroberfläche genutzt werden können.

Bedient man sich dieser Vorraussetzungen, so kann in einfacher Weise erreicht werden, dass durch den Einbau eines Wärmetauschers an geeigneter Stelle eines durchflossenen Behälters einer Abwasserreinigungsanlage zusätzlich die thermische Energie dieses Abwassers genutzt werden kann. Die aufzuwendende Energie beschränkt sich hierbei lediglich auf den Betrieb einer eventuell vorhandenen Pumpvorrichtung, die den Transport der Flüssigkeit durch den Wärmetauscher bewirkt sowie möglicherweise auf den Betrieb einer zusätzlich vorhandenen Wärmepumpe. Da die konvektiven Strömungen sowohl der Abwasserreinigung als auch der Wärmerückgewinnung dienen, fallen die Kosten hierfür nur einmalig an. Auch muss das Abwasser nicht in aufwändiger Weise in einem Tank zwischengespeichert werden. Vielmehr wird der Einbau des Wärmetauschers innerhalb von durchflossenen, zur Abwasserreinigung dienenden Behältern vorgeschlagen, da hierdurch die Investitions- und Energiekosten weiter gesenkt werden können.

Die Abwasserreinigung kann dabei in einem Industriebetrieb oder auf einer kommunalen Kläranlage erfolgen. Es kann sich insbesondere auch um eine dezentrale Abwasserreinigung in Hotels, Wohn- oder Bürokomplexen, Freizeitanlagen oder Ortsteilen handeln. Eine dezentrale Abwasserbehandlung eignet sich besonders für die Aufgabe, die Abwasserwärme mittels einer Wärmepumpe zum Heizen zu nutzen, da in diesem Fall das Abwasser vergleichsweise warm ist und ortsnah ein großer Bedarf an Heizwärme besteht.

Gemäß einer besonders vorteilhaften Ausführung des erfindungsgemäßen Verfahrens wird die konvektive Strömung in dem Abwasserbehälter durch eine Druckbelüftung erzeugt. Bei einer Druckbelüftung wird Luft in das Abwasser eingeblasen, um Mikroorganismen mit Sauerstoff zu versorgen und um gasförmige Stoffwechselprodukte wie Kohlenstoffdioxid oder Stickstoffgas auszutragen Wenn Luft in das Abwasser eingepresst wird, steigen Luftblasen im Abwasser nach oben und reißen das umgebende Abwasser mit. In dem Bereich des Behälters, in den die Luft eingepresst wird, entsteht eine starke Aufwärtsströmung und an anderer Stelle eine entsprechende Abwärtsströmung. Bei einer geeigneten Anordnung der Belüftungsvorrichtung kann man mit geringem Energieverbrauch in dem Behälter eine ausgeprägte Strömungswalze mit Strömungsgeschwindigkeiten von mehreren Metern pro Sekunde erzeugen. Die Luft wird vorzugsweise unterhalb oder schräg unterhalb des Wärmetauschers zugeführt, so dass die Aufwärtsströmung durch Turbulenz um die aufsteigenden Luftblasen herum überlagert wird. Es ist allerdings auch möglich, den Wärmetauscher an einem Ort anzuordnen, an dem die Strömung nach unten gerichtet ist. Die Außenfläche des Wärmetauschers sollte in beiden Fällen eine ungefähr vertikale Ausrichtung haben, so dass das Abwasser mit geringem Strömungswiderstand über die Außenfläche strömt. Schließlich ist es auch möglich, den Wärmetauscher an einer Stelle anzuordnen, an der die Strömung eine horizontale Komponente aufweist, wobei die Außenfläche vorzugsweise parallel zur Strömungsrichtung ausgerichtet wird.

Vorteilhafterweise und gegebenenfalls alternativ oder zusätzlich zu anderen Maßnahmen wird die konvektive Strömung in dem Behälter durch Oberflächenbelüftung erzeugt. Oberflächenbelüfter sind entweder Kreisel mit vertikaler Achse oder Walzen mit horizontaler Achse, die ein Gemisch aus Abwasser und Belebtschlamm durch die Luft schleudern oder Luftblasen in das Gemisch einschlagen, um es zu belüften. Dabei erzeugen die Oberflächenbelüfter die notwendige starke Konvektionsströmung im Belüftungsbecken.

In einer weiteren vorteilhaften Ausgestaltung der Erfindung wird vorgeschlagen, dass das Abwasser in einem Behälter, beispielsweise einem Sandfang, wie er im folgenden näher beschrieben wird, mit Druckluft belüftet wird und aufsteigende Luftblasen eine walzenförmige Strömung des Abwassers erzeugen. Eine walzenförmige Strömung wird insbesondere in länglichen Behältern durch Einblasen von Luft in der Nähe einer Seitenwand des Behälters erzeugt. Bei breiten Behältern kann aber auch eine doppelte Strömungswalze erzeugt werden, indem Luft in der Nähe der zentralen Längsachse des Behälters eingepresst wird. Vorzugsweise wird der Wärmetauscher in einem Bereich angeordnet, in dem die eingeblasenen Luftblasen nach oben steigen und eine aufwärts gerichtete Strömung des Abwassers erzeugen. Es ist allerdings auch möglich, den Wärmetauscher an einem Ort anzubringen, an dem das Abwasser nach unten zurückströmt.

Gemäß einer besonders vorteilhaften Variante der Erfindung wird in dem Behälter eine torusförmige Strömung des Abwassers erzeugt. Eine torusförmige Strömung wird vorzugsweise in Behältern mit kreisförmiger oder ungefähr quadratischer Grundfläche erzeugt. Zumeist strömt das Abwasser im Zentrum nach oben und an der Peripherie nach unten. Die Strömung kann aber auch die umgekehrte Richtung aufweisen.

In einer weiteren Ausgestaltung des erfindungsgemäßen Verfahrens wird die Strömung in dem Behälter vorteilhafterweise durch ein Rührwerk erzeugt. Dabei kann es sich um Rührwerke handeln, die eine axiale oder eine radiale Strömung erzeugen. Die Art des Rührwerkes und seine Anordnung sind insbesondere abhängig von der Form des Behälters. Bei langen rechteckigen Behältern wird man vorzugsweise horizontale Propellerrührwerke einsetzen, die eine Strömung entlang der Längsachse des Behälters erzeugen. Bei runden oder quadratischen Behältern wird man vorzugsweise Rührwerke auf der vertikalen Zentralachse anordnen. Diese verfügen entweder über Rührflügel, die eine Rotationsströmung erzeugen, oder über nach unten oder oben gerichtete Propeller, die eine torusförmige Strömung oder ringförmige Walzenströmung in dem Behälter erzeugen. Auch in all diesen Fällen werden die Wärmetauscher vorzugsweise so angeordnet, dass ihre Außenflächen parallel zur Strömung ausgerichtet sind.

Vorteilhaft ist es zudem, wenn das Abwasser in einem Sandfang gereinigt wird. Sandfänge dienen zum Abtrennen von Feststoffen hoher spezifischer Dichte, also z.B. von Sand, Split und Steinen. In Sandfängen wird eine konvektive Strömung erzeugt, die so bemessen ist, dass einerseits organische Stoffe in Schwebe gehalten werden, andererseits ein Absinken mineralischer Stoffe nicht verhindert wird. Diese konvektive Strömung ist zusätzlich nutzbar, um den Alpha-Wert an der Außenfläche von in dem Sandfang angeordneten Wärmetauschern zu erhöhen. Die in Sandfängen zum Zwecke der Sandabscheidung erzeugte konvektive Strömung ist sehr stark und eindeutig ausgeprägt. Deshalb ist sie in besonders guter Weise zum Anströmen von Wärmetauschern nutzbar. Sandfangbehälter werden häufig aus Stahl hergestellt und komplett mit allen Einbauten geliefert. Deshalb ist es besonders wirtschaftlich, Wärmetauscher fabrikmäßig in Sandfangbehälter zu integrieren.

Gemäß einer weiteren vorteilhaften Variante wird das Abwasser biologisch gereinigt. Die biologische Reinigung erfolgt zumeist in einem Belüftungsbecken einer Belebungsanlage. Teil jeder Belebungsanlage ist ein Belüftungsbecken, in dem ein Gemisch aus Abwasser und Belebtschlamm belüftet wird, um die Mikroorganismen im Belebtschlamm mit Sauerstoff zu versorgen, und um das Stoffwechselprodukt Kohlenstoffdioxid und gegebenenfalls Stickstoff auszutragen. Zumeist sind Belüftungsbecken mit einer Druckbelüftung ausgerüstet, bei der Luft in das Abwasser eingeblasen wird. Es ist besonders vorteilhaft, Wärmetauscher über dem Ort einzubauen, an dem Luft eingepresst wird. Beim Einbau eines Wärmetauschers in ein bestehendes Belüftungsbecken mit Druckbelüftung wird die bereits vorhandene konvektive Strömung ohne Zusatzkosten für den Wärmeaustausch mitgenutzt. Belüftungsbecken von Belebungsanlagen können aber auch mit Oberflächenbelüftem ausgerüstet sein, die eine konvektive Strömung erzeugen.

Zur Durchführung des beschriebenen Verfahrens wird eine Vorrichtung zum Übertragen von Wärme zwischen in einem Behälter befindlichem Abwasser und einer Flüssigkeit mittels eines von der Flüssigkeit durchströmten Wärmetauschers mit einer vom Abwasser berührten Außenfläche vorgeschlagen, wobei in dem Abwasser ein Diffusorrohr zum Einpressen von Luft und/oder ein Rührwerk angeordnet ist, die der Erzeugung einer konvektiven Strömung dienen. Erfindungsgemäß ist der Behälter hierbei ein von dem Abwasser durchflossenes Becken einer Abwasserreinigungsanlage. Derartige Becken verfügen bereits häufig über Vorrichtungen zur Erzeugung von konvektiven Strömungen, welche die Wirkung von mechanischen, biologischen und/oder chemischen Reinigungsstufen unterstützen. Um die für den Wärmetausch benötigte Energie möglichst gering zu halten, wird vorgeschlagen, Wärmetauscher in derartige von Abwasser durchflossene Behälter zu integrieren, da in diesen bereits die für den Wärmeübergang günstigen Strömungsverhältnisse vorliegen. Zudem können diese konvektiven Strömungen für die Reinigung der Wärmetauscheroberfläche genutzt werden. Die erfindungsgemäße Vorrichtung verspricht somit eine besonders günstige Energiebilanz durch die Kombination von Abwasserreinigung und Wärmerückgewinnung. Außerdem werden erhebliche Investitionskosten gespart, weil für die Wärmerückgewinnung weder ein zusätzlicher Behälter, noch Vorrichtungen zur Strömungserzeugung erforderlich sind.

Von Abwasser durchflossene Becken sind Behälter, die mit einem Zulauf und einem Ablauf versehen sind. Sie sind Beststandteil praktisch jeder Abwasserreinigungsanlage. Die Becken können oben offen oder geschlossen sein. Das Diffusorrohr ist ein horizontal angeordnetes Rohr, dem Druckluft zugeführt wird, und das mit Öffnungen versehen ist, durch die Luft in Form von groben Blasen in das Abwasser gepresst wird. Das Diffusorrohr kann alternativ mit porösen oder geschlitzten Belüfterelementen versehen sein, durch welche die Luft in Form mehr oder weniger feiner Blasen in das Abwasser eingepresst wird.

Vorteilhafterweise ist das durchströmte Becken ein Belüftungsbecken einer Belebungsanlage, die der biologischen Abwasserreinigung dient und in dem durch Belüftungseinrichtungen eine konvektive Strömung erzeugt wird. In Belebungsanlagen werden organische Bestandteile im Abwasser durch Mikroorganismen verstoffwechselt und dabei in Biomasse umgewandelt. In einer Nachklärung, beispielsweise einem Nachklärbecken, wird die Biomasse als sogenannter Belebtschlamm abgetrennt und in das Belüftungsbecken zurückgeführt. Der Zuwachs von Biomasse wird der Nachklärung als sogenannter Überschussschlamm entnommen.

Gemäß einer besonders vorteilhaften Ausführungsform ist das Becken ein Sandfang. In Sandfängen erfolgt eine mechanische Vorreinigung von Abwässern durch Abtrennung spezifisch schwerer partikulärer Sinkstoffe. Hierfür wird eine konvektive Strömung erzeugt, die so stark ist, dass sie spezifisch weniger dichte organische Stoffe in Schwebe hält.

In einer weiteren Ausgestaltung ist der Sandfang vorteilhafterweise ein Rundsandfang, in dessen Zentrum ein eine torusförmige Strömung erzeugendes Rührwerk angeordnet ist. In Rundsandfängen sind üblicherweise Rührwerke eingebaut, um eine rotierende und torusförmige Strömung zu erzeugen, so dass über dem Boden des Sandfangs das Abwasser auf einer Spiralbahn zum Zentrum strömt. Von dieser Strömung werden mineralische Feststoffe in Richtung des Zentrums geschoben und sinken beispielsweise durch einen ringförmigen Spalt in einen unter dem Boden befindlichen Sammelraum ab. Es wird vorgeschlagen, Wärmetauscher am Umfang des Rundsandfangs anzuordnen, an dem das Abwasser nach unten strömt. Alternativ können sie auch ringförmig um das Rührwerk herum angeordnet werden, wobei das Abwasser in diesen Bereichen nach oben strömt.

Alternativ ist es vorteilhaft, wenn der Sandfang ein Langsandfang mit einer Seitenwand und zumindest einem in der Nähe und entlang der Längswand angeordneten Diffusorrohr zum Einblasen von Luft und zum Erzeugen einer walzenförmigen Strömung ist. Bei Langsandfängen wird üblicherweise eine Walzenströmung durch Einblasen von Druckluft entlang einer der Längswände erzeugt. Diese Walzenströmung wird erfindungsgemäß zusätzlich genutzt, um den Wärmeübergang des in dem belüfteten Sandfang angeordneten Wärmetauschers zu verbessern.

In einer weiteren Ausformung der Erfindung weist der Wärmetauscher in vorteilhafter Weise einen Zulauf und einen Ablauf für die Flüssigkeit auf, die durch zumindest einen Strömungskanal miteinander verbunden sind, wobei äußere Oberflächen des Strömungskanals die Außenfläche des Wärmetauschers bilden. Die Flüssigkeit strömt vorzugsweise turbulent durch den Strömungskanal vom Zulauf zum Ablauf. Um den Durchfluss gering und die Temperaturdifferenz zwischen Einlauf und Auslauf hoch zu halten, sollte der Strömungskanal einen kleinen hydraulischen Durchmesser haben und lang sein. Der Strömungskanal wird durch Wände begrenzt, deren zumindest eine äußere Oberfläche die Außenfläche des Wärmetauschers bildet. Entlang innerer Oberflächen der Wände strömt die Flüssigkeit, entlang der äußeren Oberflächen der Wände strömt das Abwasser.

Besonders vorteilhaft ist es zudem, wenn der Strömungskanal aus Rohrabschnitten mit kreisförmiger, rechteckiger oder quadratischer Querschnittsfläche gebildet wird. Der Strömungskanal wird also durch eine Folge handelsüblicher Rohrprofile hergestellt, deren Mantelflächen die Außenfläche des Wärmetauschers bilden.

In einer besonders vorteilhaften Ausführung sind die Rohrabschnitte im wesentlichen horizontal ausgerichtet. Diese Ausrichtung ist insbesondere dann vorteilhaft, wenn der Behälter, in dem der Wärmetauscher angeordnet ist, flach ist. In diesem Fall werden die Rohre quer angeströmt.

In besonderen Fällen, beispielsweise in tiefen Behältern, kann es allerdings vorteilhaft sein, wenn die Rohrabschnitte im wesentlichen vertikal ausgerichtet sind. In diesem Fall werden die Rohre längs angeströmt, was den Vorteil hat, dass die Rohre einen geringen Strömungswiderstand erzeugen und somit die konvektive Strömung in dem Becken nur geringfügig beeinträchtigen.

Vorteilhafterweise sind die Rohrabschnitte parallel angeordnet und weisen Enden auf, die flüssigkeitsseitig so miteinander verbunden sind, dass die Flüssigkeit in jeweils benachbarten Rohrabschnitten in entgegengesetzter Richtung strömt. Die Flüssigkeit strömt also in den parallel angeordneten Rohrabschnitten hin und her. Hierdurch wird in einfacher Weise erreicht, dass der Wärmetauscher trotz geringer Ausmaße einen langen Strömungskanal aufweist. Die Verbindung zwischen benachbarten Rohrabschnitten kann durch senkrechte Verbindungsrohre erfolgen. Wenn rechteckige oder quadratische Rohrabschnitte ohne Abstand zueinander parallel angeordnet sind, können deren Enden durch Öffnungen, beispielsweise Bohrungen, miteinander verbunden sein.

Gemäß einer anderen vorteilhaften Variante der Erfindung wird der Strömungskanal durch zumindest ein in Form einer Wendel angeordnetes Hohlprofil gebildet, wobei die Wendel eine vertikale Achse aufweist. Das Hohlprofil kann beispielsweise ein kreisförmiges oder rechteckiges Rohrprofil sein. Auch bei dieser Variante sind Rohre parallel angeordnet, um einen langen Strömungskanal zu bilden. Wegen des Fehlens scharfer Umlenkungen ist der flüssigkeitsseitige Strömungswiderstand besonders gering. Diese Variante eignet sich besonders für runde Behälter.

In einer weiteren vorteilhaften Ausgestaltung verläuft die Außenfläche des Wärmetauschers im wesentlichen parallel zu der konvektiven Strömung und ist eben oder gewellt. Der Wärmetauscher sollte für die konvektive Strömung einen möglichst geringen Strömungswiderstand haben. Deshalb sollte seine Außenfläche parallel zur Strömung verlaufen, so dass das Abwasser ungehindert über die Außenfläche strömen kann. Wenn Rechteckprofile ohne oder mit geringem Abstand parallel angeordnet werden, formen diese eine für die Strömung ebene Außenfläche. Wenn profilierte Bleche, so wie bei neuzeitlichen Heizkörpern, miteinander verbunden werden, haben diese eine gewellte Außenfläche. Auch wenn runde Rohre parallel angeordnet werden, bilden diese näherungsweise eine gewellte Außenfläche, auch dann, wenn ein Abstand zwischen den Rohren besteht. Es handelt sich dann um eine einhüllende imaginäre Außenfläche.

Vorteilhaft ist es ebenso, wenn die Außenfläche des Wärmetauschers zugleich eine Innenfläche einer Behälterwand ist. Bei dieser Ausführungsform ist der Wärmetauscher integraler Bestandteil einer Wand des Behälters. Das hat den Vorteil, dass der Wärmetauscher keinen oder nur einen sehr geringen zusätzlichen Widerstand für die konvektive Strömung erzeugt.

Auch bringt es Vorteile mit sich, wenn der Strömungskanal des Wärmetauschers durch Hohlräume zwischen der Behälterwand und daran angebrachter Profile gebildet wird. Bei den Profilen handelt es sich um Teilprofile wie Halbrohre, U-Profile oder L-Profile. Die Profile können an der Innenseite der Behälterwand angebracht sein. Bei Metallbehältern können die Profile aber auch auf der Außenseite der Behälterwand angebracht sein, so dass die Behälterwand die wärmeübertragende Außenfläche des Wärmetauschers bildet.

In einer weiteren vorteilhaften Ausgestaltung weist die Vorrichtung verfahrbare Bürsten zum Reinigen der Außenfläche des Wärmetauschers auf. Dabei werden die Bürsten durch einen Antrieb über die Außenfläche des Wärmetauschers bewegt, um anhaftende Feststoffe oder Beläge zu entfernen.

Alternativ wird die Außenfläche des Wärmetauschers vorteilhafterweise mittels verfahrbarer Spritzdüsen gereinigt. Das Spritzwasser wird vorzugsweise dem Ablauf der Abwasserreinigungsanlage entnommen, so dass es weitgehend feststofffrei ist und die Düsen nicht verstopfen.

Weitere Vorteile der Erfindung sind in den nachfolgenden Ausführungsbeispielen beschrieben. Es zeigen:
- **Figur 1**: einen schematisch dargestellten Längsschnitt durch einen be- lüfteten Langsandfang mit einem darin angeordneten Wärme- tauscher;
- **Figur 2**: einen schematisch dargestellten Querschnitt durch den belüfte- ten Langsandfang der Figur 1;
- **Figur 3**: einen schematisch dargestellten Längsschnitt durch einen Rundsandfang mit einem Rührwerk und einem darin angeord- neten Wärmetauscher;
- **Figur 4**: einen schematisch dargestellten Längsschnitt durch ein mit Druckluft belüftetes Belüftungsbecken, in dem ein Wärmetau- scher angeordnet ist;
- **Figur 5**: einen schematisch dargestellten Längsschnitt durch eine ande- res Belüftungsbecken mit einer Oberflächenbelüftung, in dem ein Wärmetauscher angeordnet ist, und
- **Figur 6**: eine Vorrichtung zum Reinigen der Außenfläche eines Wärme- tauschers.

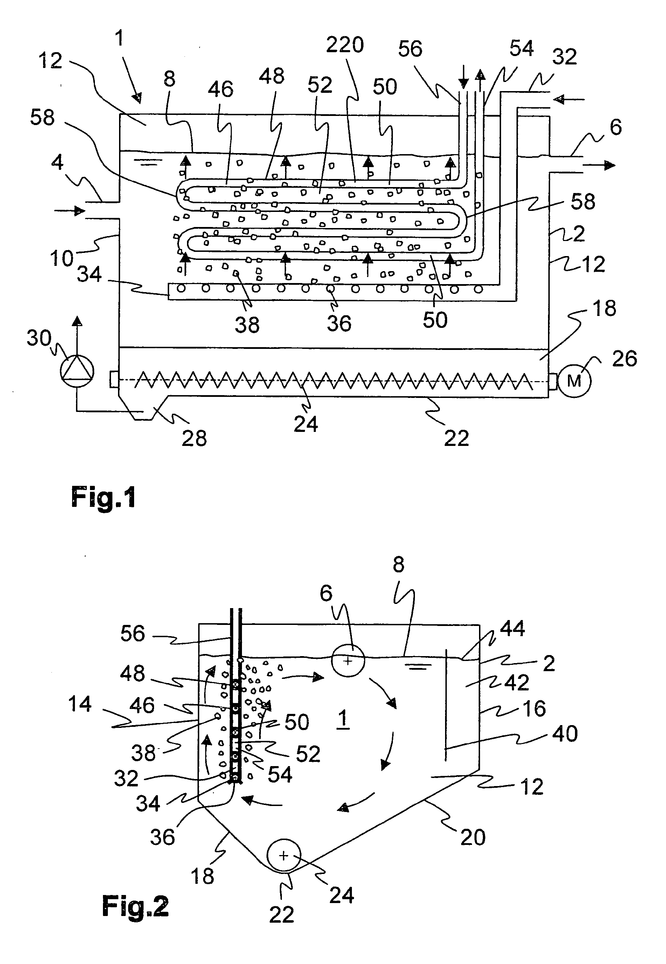

Die Figuren 1 und 2 zeigen einen Sandfang **1** mit rechteckiger Grundfläche. Der Sandfang **1** besteht aus einem Becken **2** mit einem Zulauf 4 und einem Ablauf **6** für durch den Sandfang **1** fließendes Abwasser. Das Becken **2** kann aus Beton, Metall oder Kunststoff hergestellt sein. Das Becken **2** ist mit Abwasser bis zu einem gewissen Wasserspiegel 8 gefüllt. Das Becken **2** hat vertikale Stirnwände **10** und **12** und Seitenwände **14** und **16** sowie schräge Bodenflächen **18** und **20**, die zu einer Rinne **22** hin geneigt sind, so dass Sand, der sich in dem Sandfang **1** absetzt, in die Rinne **22** rutscht. In der Rinne **22** ist eine Förderschnecke **24** angeordnet, die von einem Motor **26** angetrieben ist und den abgetrennten Sand zu einem Sumpf **28** schiebt. Mittels einer Pumpe **30** wird der Sand aus dem Sumpf **28** ausgetragen und üblicherweise zu einem nicht dargestellten Sandklassierer oder Sandwäscher gefördert. Bei der Pumpe **30** kann es sich um eine Kreiselpumpe oder auch um eine Mammutpumpe (einen Druckluftheber) handeln.

Der dargestellte Sandfang **1**, in diesem Ausführungsbeispiel ein Langsandfang, wird belüftet. Luft wird von einem nicht dargestellten Gebläse über eine Druckleitung **32** einem horizontal in der Nähe der Seitenwand **14** angeordneten Diffusorrohr **34** zugeführt, das mit Löchern **36** versehen ist, durch welche die Luft in das Abwasser eingepresst wird. Die eingepresste Luft steigt im Abwasser in Form von Luftblasen **38** zum Wasserspiegel 8 auf und erzeugt dabei über dem Diffusorrohr **34** eine starke Konvektionsströmung, die parallel zu der Seitenwand **14** nach oben gerichtet ist. In der Nähe der gegenüberliegenden Seitenwand **16** strömt das Abwasser nach unten und zurück zum Diffusorrohr **34**. Durch die Belüftung wird somit eine in etwa walzenförmige Strömung in dem Sandfang **1** erzeugt, die in den Figuren durch Pfeile angedeutet ist. Die Strömung über den Bodenflächen **18** und **20** ist dabei so stark, dass organische Feststoffe geringer Dichte, wie beispielsweise Fäkalien, aufgewirbelt werden, wohingegen mineralische Stoffe hoher Dichte auf den Bodenflächen **18** und **20** liegen bleiben. Über der schwächer geneigten Bodenfläche **20** strömt das Abwasser abwärts und schiebt darauf abgesetzten Sand zu der Rinne **22**. Hierdurch werden organische Bodenablagerungen vermieden und das Abwasser wird durchmischt, so dass auch Chemikalien besser in das Abwasser eingemischt werden können. Zudem werden Fällungen oder Flockungen beschleunigt, wodurch eine verbesserte Abwasserreinigung erfolgen kann.

Eine Trennwand **40** trennt eine Fettfangkammer **42** vom Sandfang **1** ab. Die Trennwand **40** weist üblicherweise nicht dargestellte Durchbrechungen auf, durch die Schwimmstoffe wie Fette und Öle in die von der Strömung abgeschirmte Fettfangkammer **42** gelangen, darin aufsteigen und auf dem Wasserspiegel 8 eine Schwimmschicht **44** bilden. Die Schwimmschicht **44** wird von einem nicht dargestellten Räumschild entlang der Fettfangkammer **42** zu einem Trichter geschoben, aus dem sie mittels einer Pumpe **30** ausgetragen werden kann.

Im Ausführungsbeispiel ist in dem Sandfang **1** ein Wärmetauscher **46** mit einer vom Abwasser berührten Außenfläche **48** unter dem Wasserspiegel **8** und über dem Diffusorrohr **34** und in der Nähe der Seitenwand **14** so angeordnet, dass die Luftblasen **38** gemeinsam mit der im Abwasser erzeugten Strömung an der Außenfläche **48** des Wärmetauschers **46** entlang aufsteigen und zur Reinigung der Außenfläche **48** des Wärmetauschers **46** beitragen. Allerdings könnte der Wärmetauscher **46** auch in der Nähe der gegenüberliegenden Seitenwand **16** beziehungsweise der Trennwand **40** oder auch über der Bodenfläche **20** angeordnet sein, so dass das Abwasser dort abwärts an der Außenfläche **48** vorbeiströmt.

Im Ausführungsbeispiel besteht der Wärmetauscher **46** aus einer Reihe parallel angeordneter Rohre **50**, zwischen denen Zwischenräume **52** bestehen. Alternativ kann der Wärmetauscher **46** allerdings auch aus anderen Hohlprofilen, wie beispielsweise Vierkantprofilen bestehen. Es ist auch möglich, Hohlprofile horizontal oder vertikal und ohne Zwischenräume **52** anzuordnen.

Der Wärmetauscher **46** weist ein Zulaufrohr **54** und ein Ablaufrohr **56** für Flüssigkeit auf, die innen durch den Wärmetauscher **46** und seine einen langen Strömungskanal **220** bildenden Rohre **50** strömt. Die Rohre 50 sind an ihren Enden mittels Rohrbögen **58** so miteinander verbunden, dass die Flüssigkeit in benachbarten Rohren **50** in entgegengesetzter Richtung strömt. Auf diese Weise wird erstens erreicht, dass der Strömungskanal **220** durch die Rohre **50** möglichst lang ist und eine große Außenfläche **48** aufweist. Zweitens wird erreicht, dass die Flüssigkeit auch bei geringem Durchfluss durch den Wärmetauscher **46** in den hintereinander durchflossenen Rohren **50** schnell und damit turbulent strömt, so dass der flüssigkeitsseitige Alpha-Wert hoch ist. Drittens ermöglicht dies, dass der Wärmetauscher **46** trotz großer Außenfläche **48** kurz und kompakt ist.

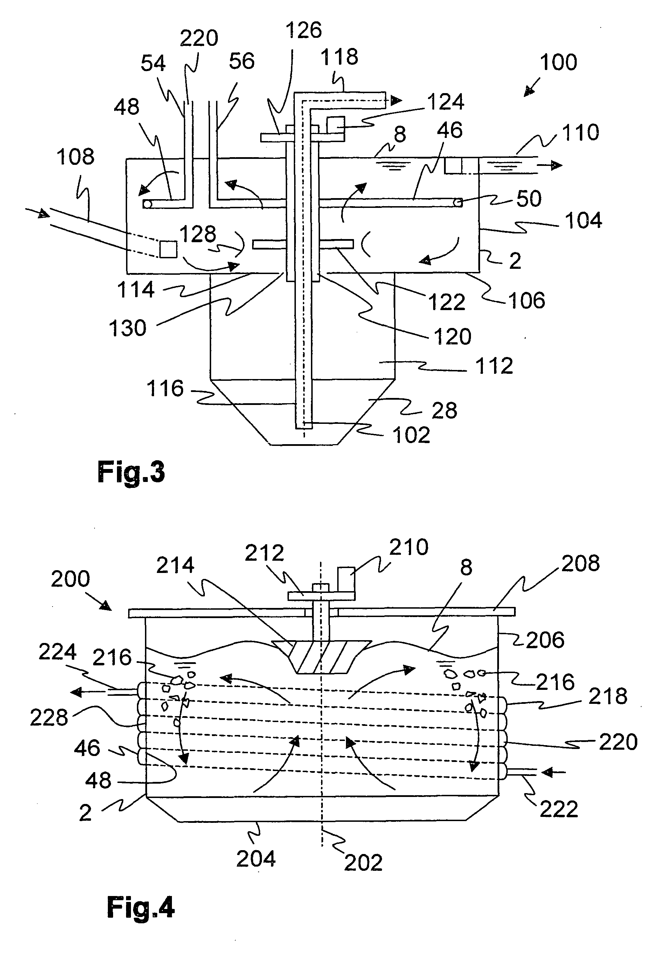

Figur 3 zeigt einen Rundsandfang **100** mit einer vertikalen Achse **102**, einem kreisförmigen Becken **2**, einer Umfangswand **104**, einem Boden **106**, einem Zulaufkanal **108** und einem Ablaufkanal **110**. Der Zulaufkanal **108** und der Ablaufkanal **110** münden im wesentlichen tangential in das Becken **2**, so dass in diesem eine rotierende Strömung erzeugt wird und der Druckverlust beim Durchströmen von Abwasser durch den Rundsandfang **100** gering bleibt. Unter dem Becken **2** ist ein Sammelraum **112** für abgeschiedenen Sand angeordnet. Der Sammelraum **112** ist durch eine Bodenplatte **114** vom Becken **2** abgetrennt und weist einen Sumpf **28** auf, von dem ein axiales Steigrohr **116** ausgeht, durch den der abgeschiedene Sand aus dem Sumpf **28** mittels einer nicht dargestellten Pumpvorrichtung oder einem Druckluftheber vertikal abgesaugt und durch eine Leitung **118** einem ebenfalls nicht dargestellten Sandklassierer oder Sandwäscher zugeführt wird.

Koaxial um das Steigrohr **116** herum ist eine rotierende Hohlwelle **120** angeordnet, an der propellerartige Flügel 122 angebracht sind. Die Hohlwelle **120** wird von einem Motor **124** über ein Getriebe 126 angetrieben. Durch Rotation der Flügel **122** wird in dem Becken 2 eine axiale Aufwärtsströmung des Abwassers erzeugt. Die Ausbildung dieser Aufwärtsströmung wird durch einen um die Flügel **122** herum koaxial angeordneten Leitring **128** unterstützt. Unter dem Wasserspiegel **8** strömt das Abwasser radial nach außen, in der Nähe der Umfangswand **104** strömt das Abwasser nach unten. Über dem Boden **106** und der Bodenplatte **114** strömt das Wasser radial zur Hohlwelle **120** und zu den Flügeln **122** zurück. Mit Pfeilen ist die Richtung der torusförmigen Strömung angedeutet. Dieser torusförmigen Strömung ist noch eine Rotationsströmung um die vertikale Achse **102** herum überlagert, die zum einen durch das tangential durch den Zulaufkanal **108** zufließende und durch den Abflusskanal **110** abfließende Wasser und zum anderen durch die Rotation der Flügel **122** erzeugt wird.

Spezifisch dichte Feststoffe wie Sand werden zum einen durch die Rotationsströmung infolge des sogenannten Teetasseneffektes und zum anderen durch die über dem Boden **106** radial nach innen gerichtete torusförmige Strömung zum Zentrum des Beckens **2** getrieben. Dabei setzen sie sich auf dem Boden **106** und der Bodenblatte **114** ab und werden in Richtung zur Achse **102** geschoben. Zwischen der Bodenplatte **114** und der Hohlwelle **120** ist ein Ringspalt **130** angeordnet, durch den der Sand in den Sammelraum **112** absinkt. Weniger dichte organische Stoffe werden hingegen durch die Strömung in Schwebe gehalten und gelangen überwiegend mit dem Abwasser in den Ablaufkanal **110**. So wird erreicht, dass der Sandfang **1** eine gute Trennschärfe hat, was bedeutet, dass einerseits wenig Sand im Abwasser verbleibt und andererseits nur geringe Mengen organischer Stoffe mit dem Sand ausgetragen werden.

In dem Becken **2** ist unter dem Wasserspiegel **8** und in der Nähe der Umfangswand **104** ein Wärmetauscher **46** angeordnet. Flüssigkeit strömt durch ein Zulaufrohr **54** und ein ringförmiges Rohr **50** zu einem Ablaufrohr **56**. Das ringförmige Rohr **50** bildet einen Strömungskanal **220** des Wärmetauschers **46**. Die Flüssigkeit strömt vom Ablaufrohr **56** in einem Kreislauf über eine nicht dargestellte Heiz- oder Kühleinrichtung, z.B. eine Wärmepumpe, worin sie erwärmt oder abgekühlt wird, zum Zulaufrohr **54** zurück. Während die Flüssigkeit durch das Rohr **50** strömt, kühlt sie sich ab oder wird erwärmt, indem sie durch eine Außenfläche **48** des Rohres **50** Wärme an das Abwasser abgibt oder vom Abwasser aufnimmt. Im Ausführungsbeispiel besteht der Wärmetauscher **46** nur aus einem einzigen ringförmigen Rohr **50**. Er kann aber selbstverständlich auch aus einer wendelförmig ausgebildeten Rohrleitung bestehen.

Der Wärmetauscher **46** ist im Ausführungsbeispiel in der Nähe der Umfangswand **104** angeordnet, wo das Abwasser an der Außenfläche 48 des Wärmetauschers **46** nach unten strömt. Der Wärmetauscher **46** kann aber auch an anderer Stelle der torusförmigen Strömung angeordnet werden; beispielsweise kann der Leitring **128** als Wärmetauscher **46** ausgebildet sein, wobei seine der Achse **102** zugewandte Außenfläche 48 einer sehr starken axialen und rotierenden Strömung ausgesetzt ist.

Figur 4 zeigt ein Belüftungsbecken **200** mit einer Oberflächenbelüftung. In einem Becken **2** befindet sich ein Gemisch aus Abwasser und Belebtschlamm. Das im Ausführungsbeispiel dargestellte Becken **2** ist kreisförmig, hat eine vertikale Achse **202**, eine Sohle **204** und eine Umfangswand **206**, die im Ausführungsbeispiel aus Metallblech hergestellt ist. Über dem Becken **2** ist eine Brücke **208** zur Aufnahme eines Motors **210**, eines Getriebes **212** und eines um die vertikale Achse **202** rotierenden Belüftungskreisels **214** angeordnet. Der Belüftungskreisel **214** saugt das Gemisch aus Abwasser und Belebtschlamm im Bereich der Achse **202** nach oben und schleudert es über den Wasserspiegel **8** radial nach außen. Dabei werden in das Gemisch aus Abwasser und Belebtschlamm Luftblasen **216** eingetragen, die das Gemisch mit Sauerstoff versorgen. Im Becken **2** wird eine ausgeprägte torusförmige Strömung erzeugt, die im Bereich der Achse **202** nach oben und in der Nähe der Umfangswand **206** nach unten gerichtet ist.

Halbrohrprofile **218** sind um die Umfangswand **206** herum so angebracht, dass zwischen der Umfangswand **206** und den Halbrohrprofilen **218** ein wendelförmiger Strömungskanal **220** ausgebildet ist, durch den hindurch Flüssigkeit von einem Zulauf **222** zu einem Ablauf **224** strömt. Die Umfangswand **206** und die an ihr angebrachten Halbrohrprofile **218** bilden einen Wärmetauscher **46**. Die Innenseite der Umfangswand **206** ist zugleich eine Außenfläche **48** des Wärmetauschers **46**. Die Außenseite der Umfangswand **206** ist zugleich eine Innenfläche **228** des Strömungskanals **220**, welcher durch den Wärmetauscher **46** verläuft. Die Flüssigkeit strömt durch den Strömungskanal **220** des Wärmetauschers **46** und das Gemisch aus Abwasser und Belebtschlamm strömt entlang der Außenfläche **48** des Wärmetauschers **46**. Somit dient ein Teil der Umfangswand **206** zur Übertragung von Wärme aus dem Abwasser in die Flüssigkeit oder umgekehrt.

Bei turbulenter Strömung der Flüssigkeit im Strömungskanal **220** und des Abwassers an der Außenfläche **48** werden hohe Alpha-Werte für den Wärmeübergang erreicht. Die Umfangswand **206** im Bereich des Wärmetauschers **46** sollte möglichst dünn sein, um eine gute Wärmeleitung durch die Umfangswand **206** zu erreichen. Da die Umfangswand **206** durch die angebrachten Halbrohrprofile **218** verstärkt wird, kann die Umfangswand **206** im Bereich des Wärmetauschers **46** dünn ausgeführt werden.

Im Ausführungsbeispiel sind Halbrohrprofile **218** dargestellt, die sich gegenseitig berühren. Diese können aber auch mit Abständen angebracht werden. Es ist selbstverständlich auch möglich, eckige Profile zu verwenden.

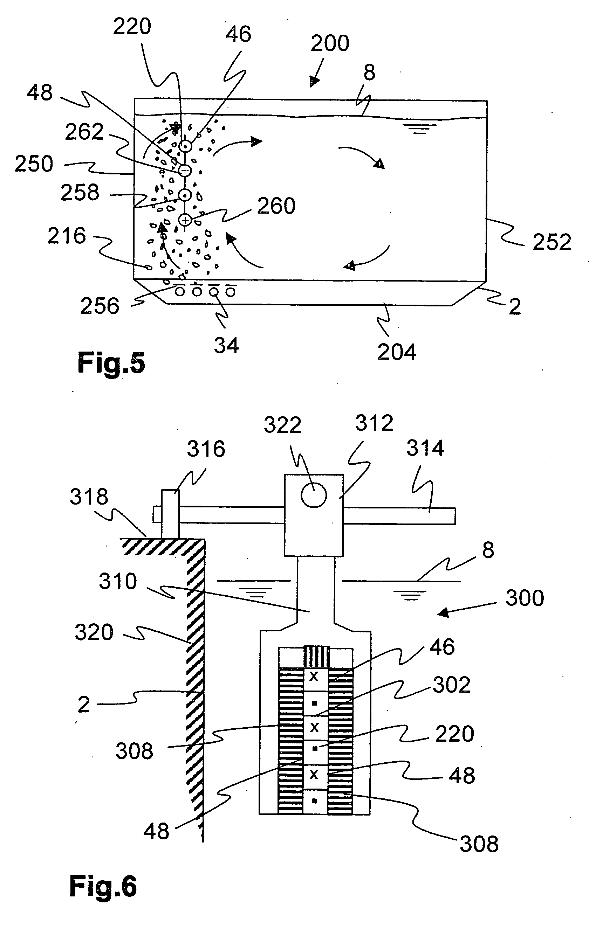

In Figur **5** ist ein Belüftungsbecken **200** mit einer Druckbelüftung dargestellt. Ein rechteckiges Becken **2** hat eine ebene Sohle **204** und Längswände **250** und **252**. Über der Sohle **204** und in der Nähe der Längswand **250** sind Diffusorrohre **34** angeordnet, in die von einem nicht dargestellten Gebläse Druckluft eingeblasen wird. An den Diffusorrohren **34** sind Belüfterelemente **256** angeordnet, die im Ausführungsbeispiel tellerförmig sind. Es können allerdings auch andere, beispielsweise rohrförmige oder plattenförmige Belüfterelemente **256** verwendet werden. Die Belüfterelemente **256** weisen poröse Körper oder geschlitzte Membranen auf, durch die zugeführte Druckluft in Form feiner Luftblasen **216** in das Abwasser eingetragen wird. Diese steigen zum Wasserspiegel **8** auf und erzeugen in der Nähe der Längswand **250** eine aufwärts gerichtete konvektive Abwasserströmung. In der Nähe der gegenüberliegenden Längswand **252** strömt das Abwasser zurück nach unten. Im Becken **2** wird eine walzenförmige Strömung erzeugt, deren Richtung durch Pfeile angedeutet ist.

Über den Belüfterelementen **256** ist ein Wärmetauscher **46** mit einem Strömungskanal **220** für hindurchströmende Flüssigkeit an einer Stelle angeordnet, an der Abwasser entlang einer Außenfläche **48** des Wärmetauschers **46** nach oben strömt.

Der Wärmetauscher **46** dieses Ausführungsbeispieles ist aus zwei gewellten Blechen **258** und **260** gebildet, die so miteinander verbunden sind, dass zwischen ihnen längliche Hohlräume **262** entstehen, die den Strömungskanal **220** bilden. Benachbarte Hohlräume **262** sind an ihren Enden so miteinander verbunden, dass die Flüssigkeit nacheinander mehrere Hohlräume **262** in alternierender Richtung durchströmt. Die Bleche **258** und **260** sind vertikal ausgerichtet, so dass das aufsteigende Abwasser ohne großen Widerstand an ihnen entlang strömen kann.

Im Ausführungsbeispiel ist der Wärmetauscher **46** so orientiert, dass sich die Hohlräume **262** horizontal erstrecken. Es wäre aber auch durchaus möglich, den Wärmetauscher **46** um 90 Grad verdreht anzuordnen, so dass die Hohlräume **262** vertikal verlaufen.

Figur 6 zeigt einen in einem Becken **2** angeordneten Wärmetauscher **46** sowie eine erfindungsgemäße Reinigensvorrichtung **300**. Der Wärmetauscher **46** ist aus mehreren parallel und horizontal ausgerichteten Vierkantrohren **302** hergestellt, die einen Strömungskanal **220** für Flüssigkeit bilden und an beiden Enden mit nicht dargestellten Durchbrechungen, beispielsweise Bohrungen, versehen sind, durch die die Flüssigkeit jeweils von einem in ein benachbartes Vierkantrohr **302** strömt, so dass die Flüssigkeit in benachbarten Vierkantrohren **302** in entgegengesetzter Richtung strömt.

Der Wärmetauscher **46** hat zwei parallele vertikale Außenflächen **48**, die aus entgegengesetzten Oberflächen der Vierkantrohre **302** zusammengesetzt sind. Entlang der vertikalen Außenflächen **48** des Wärmetauschers **46** strömt das Abwasser konvektiv nach oben, wobei die Konvektionsströmung beispielsweise durch Einblasen von Luft unterhalb des Wärmetauschers **46** erzeugt werden kann.

Die Reinigungsvorrichtung **300** weist Bürsten **308** auf, die horizontal über die Außenflächen **48** des Wärmetauschers **46** bewegbar sind, um diese von anhaftenden Feststoffen und Belägen zu reinigen. Die Bürsten **308** sind in einer gabelförmigen Halterung **310** angebracht, die mit einem Getriebe **312** verbunden ist. Horizontal durch das Getriebe **312** verläuft zumindest eine Radachse **314** mit Rädern **316** an beiden Enden. Die Räder **316** laufen auf Laufflächen **318** der Beckenwand 320 oder auf Schienen. Die Reinigungsvorrichtung **300** wird durch Rotation einer Gewindestange **322** bewegt, die durch das Getriebe **312** verläuft. Alternativ wäre es natürlich auch möglich, die Reinigungsvorrichtung **300** mittels eines Seil- oder Kettentriebes zu bewegen. Anstelle der Bürsten **308** könnten bei der Reinigungsvorrichtung **300** auch Spritzdüsen angeordnet sein.

Die vorliegende Erfindung wurde anhand eines Ausführungsbeispiels näher erläutert. Sie ist jedoch nicht auf das dargestellte und beschriebene Beispiel beschränkt. Es sind Abwandlungen im Rahmen der Schutzansprüche jederzeit möglich.

## Patentansprüche

1. Verfahren zum Übertragen von Wärme zwischen in einem Behälter befindlichem Abwasser und einer Flüssigkeit mittels eines von der Flüssigkeit durchströmten Wärmetauschers (46) mit einer vom Abwasser berührten Außenfläche (48), wobei in dem Abwasser eine konvektive Strömung erzeugt wird, die das Abwasser entlang der Außenfläche (48) bewegt, **dadurch gekennzeichnet, dass** das Abwasser durch den Behälter strömt, und die erzeugte konvektive Strömung als Hilfsmittel zur Reinigung des Abwassers und gleichzeitig zur Reinigung der Außenfläche (48) des Wärmetauschers (46) genutzt wird.

2. Verfahren nach dem vorherigen Anspruch, **dadurch gekennzeichnet, dass** die konvektive Strömung in dem Behälter durch eine Druckbelüftung erzeugt wird.

3. Verfahren nach einem der vorherigen Ansprüche, **dadurch gekennzeichnet, dass** die konvektive Strömung in dem Behälter durch eine Oberflächenbelüftung erzeugt wird.

4. Verfahren nach einem der vorherigen Ansprüche, **dadurch gekennzeichnet, dass** das Abwasser in dem Behälter, insbesondere in einem Sandfang (1) mit Druckluft belüftet wird und aufsteigende Luftblasen (38, 216) eine walzenförmige Strömung des Abwassers erzeugen.

5. Verfahren nach einem der vorherigen Ansprüche, **dadurch gekennzeichnet, dass** in dem Behälter eine torusförmige Strömung des Abwassers erzeugt wird.

6. Verfahren nach einem der vorherigen Ansprüche, **dadurch gekennzeichnet, dass** die konvektive Strömung in dem Behälter durch ein Rührwerk erzeugt wird.

7. Verfahren nach einem der vorherigen Ansprüche, **dadurch gekennzeichnet, dass** das Abwasser in einem Sandfang (1) gereinigt wird.

8. Verfahren nach einem der vorherigen Ansprüche, **dadurch gekennzeichnet, dass** das Abwasser biologisch gereinigt wird.

9. Vorrichtung zum Übertragen von Wärme zwischen in einem Behälter befindlichem Abwasser und einer Flüssigkeit mittels eines von der Flüssigkeit durchströmten Wärmetauschers (46) mit einer vom Abwasser berührten Außenfläche (48), wobei in dem Abwasser ein Diffusorrohr (34) zum Einpressen von Luft und/oder ein Rührwerk angeordnet ist zur Erzeugung einer konvektiven Strömung, die das Abwasser entlang der Außenfläche (48) bewegt, **dadurch gekennzeichnet, dass** der Behälter ein von dem Abwasser durchflossenes Becken (2) einer Abwasserreinigungsanlage ist.

10. Vorrichtung nach dem vorherigen Anspruch, **dadurch gekennzeichnet, dass** das Becken (2) ein Belüftungsbecken (200) einer Belebungsanlage ist.

11. Vorrichtung nach einem der vorherigen Ansprüche, **dadurch gekennzeichnet, dass** das Becken (2) ein Sandfang (1) ist.

12. Vorrichtung nach einem der vorherigen Ansprüche, **dadurch gekennzeichnet, dass** der Sandfang (1) ein Rundsandfang (100) ist, in dessen Zentrum ein eine torusförmige Strömung erzeugendes Rührwerk angeordnet ist.

13. Vorrichtung nach einem der vorherigen Ansprüche, **dadurch gekennzeichnet, dass** der Sandfang (1) ein Langsandfang mit einer Seitenwand (14, 16) und zumindest einem entlang der Seitenwand (14, 16) angeordneten Diffusorrohr (34) zum Einblasen von Luft und zum Erzeugen einer walzenförmigen Strömung ist.

14. Vorrichtung nach einem der vorherigen Ansprüche, **dadurch gekennzeichnet, dass** der Wärmetauscher (46) einen Zulauf (4, 222) und einen Ablauf (6, 224) für die Flüssigkeit aufweist, die durch zumindest einen Strömungskanal (220) miteinander verbunden sind, und dass äußere Oberflächen des Strömungskanals (220) die Außenfläche (48) des Wärmetauschers (46) bilden.

15. Vorrichtung nach einem der vorherigen Ansprüche, **dadurch gekennzeichnet, dass** der Strömungskanal (220) aus Rohrabschnitten mit kreisförmiger, rechteckiger oder quadratischer Querschnittsfläche gebildet ist.

16. Vorrichtung nach einem der vorherigen Ansprüche, **dadurch gekennzeichnet, dass** die Rohrabschnitte im wesentlichen horizontal ausgerichtet sind.

17. Vorrichtung nach einem der vorherigen Ansprüche, **dadurch gekennzeichnet, dass** die Rohrabschnitte im wesentlichen vertikal ausgerichtet sind.

18. Vorrichtung nach einem der vorherigen Ansprüche, **dadurch gekennzeichnet, dass** die Rohrabschnitte parallel angeordnet sind und Enden aufweisen, die flüssigkeitsseitig so miteinander verbunden sind, dass die Flüssigkeit in jeweils benachbarten Rohrabschnitten in entgegengesetzter Richtung strömt.

19. Vorrichtung nach einem der vorherigen Ansprüche, **dadurch gekennzeichnet, dass** der Strömungskanal (220) durch zumindest ein in Form einer Wendel angeordnetes Hohlprofil gebildet ist, wobei die Wendel eine vertikale Achse (102, 202) aufweist.

20. Vorrichtung nach einem der vorherigen Ansprüche, **dadurch gekennzeichnet, dass** die Außenfläche (48) des Wärmetauschers (46) im wesentlichen parallel zu der konvektiven Strömung verläuft und eben oder gewellt ist.

21. Vorrichtung nach einem der vorherigen Ansprüche, **dadurch gekennzeichnet, dass** die Außenfläche (48) des Wärmetauschers (46) zugleich eine Innenseite einer Behälterwand ist.

22. Vorrichtung nach einem der vorherigen Ansprüche, **dadurch gekennzeichnet, dass** der Strömungskanal (220) des Wärmetauschers (46) durch Hohlräume (262) zwischen der Behälterwand und daran angebrachten Profilen gebildet ist.

23. Vorrichtung nach einem der vorherigen Ansprüche, **dadurch gekennzeichnet, dass** die Außenfläche (48) des Wärmetauschers (46) mittels verfahrbarer Bürsten (308) abreinigbar ist.

24. Vorrichtung nach einem der vorherigen Ansprüche, **dadurch gekennzeichnet, dass** die Außenfläche (48) des Wärmetauschers (46) mittels verfahrbarer Spritzdüsen abreinigbar ist.

## Claims

1. A process for transferring heat between wastewater located in a container and a fluid by means of a heat exchanger (46) through which the fluid flows and which has an outer surface (48) contacted by the wastewater, in which a convective flow is produced in the wastewater that moves the wastewater along the outer surface (48), **characterized in that** the wastewater flows through the container and the convective flow produced is used for cleaning the wastewater and at the same time for cleaning the outer surface (48) of the heat exchanger (46).

2. The process according to the previous claim, **characterized in that** the convective flow is produced in the container by a pressurized aeration.

3. The process according to one of the previous claims, **characterized in that** the convective flow is produced in the container by a surface aeration.

4. The process according to one of the previous claims, **characterized in that** the wastewater is aerated in the container, especially in a sand trap (1) with compressed air and that rising air bubbles (38, 216) produce a vortex-like flow of the wastewater.

5. The process according to one of the previous claims, **characterized in that** a toroidal flow of the wastewater is produced in the container.

6. The process according to one of the previous claims, **characterized in that** the convective flow in the container is produced by an agitator.

7. The process according to one of the previous claims, **characterized in that** the wastewater is purified in a sand trap (1).

8. The process according to one of the previous claims, **characterized in that** the wastewater is biologically purified.

9. An apparatus for transferring heat between wastewater located in a container and a fluid by means of a heat exchanger (46) through which the fluid flows and which has an outer surface (48) contacted by the wastewater, in which wastewater a diffusion pipe (34) is arranged for forcing in air and/or an agitator is arranged for producing a convective flow that moves the wastewater along the outer surface (48), **characterized in that** the container is a basin (2) of a wastewater purification plant through which container the wastewater flows.

10. The apparatus according to the previous claim, **characterized in that** the basin (2) is an aeration basin (200) of an activated-sludge plant.

11. The apparatus according to one of the previous claims, **characterized in that** the basin (2) is a sand trap (1).

12. The apparatus according to one of the previous claims, **characterized in that** the sand trap (1) is a round sand trap (100) in the center of which an agitator producing a toroidal flow is arranged.

13. The apparatus according to one of the previous claims, **characterized in that** the sand trap (1) is a longitudinal sand trap with a side wall (14, 16) and at least one diffusion pipe (34) arranged along the side wall (14, 16) for forcing in air and for producing a vortex-like flow.

14. The apparatus according to one of the previous claims, **characterized in that** the heat exchanger (46) comprises an inlet (4, 222) and an outlet (6, 224) for the fluid that are connected to one another by at least one flow conduit (220), and that the outer surfaces of the flow conduit (220) form the outer surface (48) of the heat exchanger (46).

15. The apparatus according to one of the previous claims, **characterized in that** the flow conduit (220) is formed by pipe sections with a circular, rectangular or square cross-sectional area.

16. The apparatus according to one of the previous claims, **characterized in that** the pipe sections are aligned substantially horizontally.

17. The apparatus according to one of the previous claims, **characterized in that** pipe sections are aligned substantially vertically.

18. The apparatus according to one of the previous claims, **characterized in that** pipe sections are arranged in parallel and have ends that are connected to each other in such a manner on the fluid side that the fluid flows in opposite directions in adjacent pipe sections.

19. The apparatus according to one of the previous claims, **characterized in that** the flow conduit (220) is formed by at least one hollow profile arranged in the form of a helix, which helix has a vertical axis (102, 202).

20. The apparatus according to one of the previous claims, **characterized in that** the outer surface (48) of the heat exchanger (46) runs substantially parallel to the convective flow and is level or corrugated.

21. The apparatus according to one of the previous claims, **characterized in that** the outer surface (48) of the heat exchanger (46) is an inner surface of a container wall at the same time.

22. The apparatus according to one of the previous claims, **characterized in that** the flow conduit (220) of the heat exchanger (46) is formed by hollow spaces (262) between the container wall and profiles attached to it.

23. The apparatus according to one of the previous claims, **characterized in that** the outer surface (48) of the heat exchanger (46) can be cleaned by movable brushes (308).

24. The apparatus according to one of the previous claims, **characterized in that** the outer surface (48) of the heat exchanger (46) can be cleaned by movable spray nozzles.

## Revendications

1. Procédé pour transmettre la chaleur entre de l'eau résiduaire contenue dans un réservoir et un liquide au moyen d'un échangeur de chaleur (46) parcouru par le liquide, avec une surface extérieure (48) en contact avec l'eau résiduaire, sachant qu'un courant convectif est généré dans l'eau résiduaire, lequel déplace l'eau résiduaire le long de la surface extérieure (48), **caractérisé en ce que** l'eau résiduaire parcourt le réservoir, et que le courant convectif généré est utilisé à la fois comme moyen pour l'épuration de l'eau résiduaire et le nettoyage de la surface extérieure (48) de l'échangeur de chaleur (46).

2. Procédé selon la revendication précédente, **caractérisé en ce que** le courant convectif est généré dans le réservoir par aération à l'air comprimé.

3. Procédé selon l'une quelconque des revendications précédentes, **caractérisé en ce que** le courant convectif est généré dans le réservoir par aération de surface.

4. Procédé selon l'une quelconque des revendications précédentes, **caractérisé en ce que** l'eau résiduaire dans le réservoir, particulièrement dans un dessableur (1), est aérée à l'air comprimé et que les bulles d'air ascendantes (38, 216) génèrent un écoulement cylindrique de l'eau résiduaire.

5. Procédé selon l'une quelconque des revendications précédentes, **caractérisé en ce qu'**un courant toroïdal de l'eau résiduaire est généré dans le réservoir.

6. Procédé selon l'une quelconque des revendications précédentes, **caractérisé en ce que** le courant convectif dans le réservoir est généré par un mélangeur-agitateur.

7. Procédé selon l'une quelconque des revendications précédentes, **caractérisé en ce que** l'eau résiduaire est épurée dans un dessableur (1).

8. Procédé selon l'une quelconque des revendications précédentes, **caractérisé en ce que** l'eau résiduaire est épurée biologiquement.

9. Dispositif pour transmettre la chaleur entre de l'eau résiduaire contenue dans un réservoir et un liquide au moyen d'un échangeur de chaleur (46) parcouru par le liquide, avec une surface extérieure (48) en contact avec l'eau résiduaire, sachant qu'un tube diffuseur (34) pour injecter de l'air et/ou un mélangeur-agitateur est/sont disposé(s) dans l'eau résiduaire, pour générer un courant convectif, lequel déplace l'eau résiduaire le long de la surface extérieure (48), **caractérisé en ce que** le réservoir est un bassin (2) d'une station d'épuration d'eaux résiduaires parcouru par l'eau résiduaire.

10. Dispositif selon la revendication précédente, **caractérisé en ce que** le bassin (2) est un bassin d'aération (200) d'une installation d'activation.

11. Dispositif selon l'une quelconque des revendications précédentes, **caractérisé en ce que** le bassin (2) est un dessableur (1).

12. Dispositif selon l'une quelconque des revendications précédentes, **caractérisé en ce que** le dessableur (1) est un dessableur circulaire (100), au centre duquel est disposé un mélangeur-agitateur générant un courant toroïdal.

13. Dispositif selon l'une quelconque des revendications précédentes, **caractérisé en ce que** le dessableur (1) est un dessableur longitudinal avec une paroi latérale (14, 16) et au moins un tube diffuseur (34) disposé le long de ladite paroi latérale (14, 16) pour insuffler de l'air et générer un courant cylindrique.

14. Dispositif selon l'une quelconque des revendications précédentes, **caractérisé en ce que** l'échangeur de chaleur (46) comporte une arrivée (4, 222) et un écoulement (6, 224) pour le liquide, lesquels sont reliés par au moins un canal d'écoulement (220), et que des surfaces extérieures dudit canal d'écoulement (220) constituent la surface extérieure (48) de l'échangeur de chaleur (46).

15. Dispositif selon l'une quelconque des revendications précédentes, **caractérisé en ce que** le canal d'écoulement (220) se constitue de segments de tube à surface de section circulaire, rectangulaire ou carrée.

16. Dispositif selon l'une quelconque des revendications précédentes, **caractérisé en ce que** les segments de tube sont orientés dans un sens essentiellement horizontal.

17. Dispositif selon l'une quelconque des revendications précédentes, **caractérisé en ce que** les segments de tube sont orientés dans un sens essentiellement vertical.

18. Dispositif selon l'une quelconque des revendications précédentes, **caractérisé en ce que** les segments de tube sont disposés parallèlement et comportent des extrémités reliées l'une à l'autre côté liquide de manière à ce que le liquide s'écoule dans des directions opposées dans des segments de tube respectivement adjacents l'un à l'autre.

19. Dispositif selon l'une quelconque des revendications précédentes, **caractérisé en ce que** le canal d'écoulement (220) est constitué par au moins un profil creux disposé en forme d'hélice, sachant que l'hélice comporte un axe vertical (102, 202)

20. Dispositif selon l'une quelconque des revendications précédentes, **caractérisé en ce que** la surface extérieure (48) de l'échangeur de chaleur (46) présente une allure essentiellement parallèle au courant convectif et qu'elle est plane ou ondulée.

21. Dispositif selon l'une quelconque des revendications précédentes, **caractérisé en ce que** la surface extérieure (48) de l'échangeur de chaleur (46) est en même temps une face intérieure d'une paroi de réservoir.

22. Dispositif selon l'une quelconque des revendications précédentes, **caractérisé en ce que** le canal d'écoulement (220) de l'échangeur de chaleur (46) est constitué par des espaces vides (262) entre la paroi du réservoir et des profilés qui y sont montés.

23. Dispositif selon l'une quelconque des revendications précédentes, **caractérisé en ce que** la surface extérieure (48) de l'échangeur de chaleur (46) peut être nettoyée au moyen de brosses mobiles (308).

24. Dispositif selon l'une quelconque des revendications précédentes, **caractérisé en ce que** la surface extérieure (48) de l'échangeur de chaleur (46) peut être nettoyée au moyen de gicleurs mobiles.
